(19) **Europäisches Patentamt / European Patent Office / Office européen des brevets**

(11) **EP 2 102 416 B1**

(12) # EUROPEAN PATENT SPECIFICATION

(45) Date of publication and mention
of the grant of the patent:
**26.10.2011 Bulletin 2011/43**

(51) Int Cl.:
*E01C 19/00* (2006.01)   *E01C 23/01* (2006.01)
*G01C 15/02* (2006.01)

(21) Application number: **08705045.6**

(22) Date of filing: **09.01.2008**

(86) International application number:
**PCT/NL2008/000007**

(87) International publication number:
**WO 2008/085030 (17.07.2008 Gazette 2008/29)**

(54) **DEVICE FOR DETERMINING A TRANSVERSE SECTION OF A ROAD SURFACE**

VORRICHTUNG ZUR FESTLEGUNG EINES QUERABSCHNITTS EINER STRASSENOBERFLÄCHE

DISPOSITIF PERMETTANT DE DÉTERMINER UNE SECTION TRANSVERSALE D'UNE SURFACE DE ROUTE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.01.2007 NL 1033219**

(43) Date of publication of application:
**23.09.2009 Bulletin 2009/39**

(73) Proprietor: **Topcon Positioning Systems, Inc.**
**Livermore CA 94551 (US)**

(72) Inventor: **MENNINK, Jan**
**NL-7423 ZG Deventer (NL)**

(74) Representative: **Kuhnen, Rainer K. et al**
**Kuhnen & Wacker**
**Patent- und Rechtsanwaltsbüro**
**Prinz-Ludwig-Strasse 40A**
**85354 Freising (DE)**

(56) References cited:
**DE-A1- 10 155 488     GB-A- 2 219 399**
**NL-C2- 1 009 364**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a device for determining a contour of a ground surface, for instance the transverse section of a road surface, at least comprising measuring means for generating along a determined distance on a ground surface actual values for the height and the position of a number of points of this ground surface relative to a determined reference point, which measuring means comprise

a laser light source which can be placed at a measuring point above the ground surface and which is adapted to generate a laser beam moving over said determined distance on the ground surface,
sensor means for detecting the laser beam reflected by the ground surface to the measuring point,
distance-measuring means for determining the distance travelled by said laser beam between the laser light source and the ground surface, and
processing means for generating from signals from the laser light source, the sensor means and the time-measuring means of actual values for the height ($Z_j$, $Z_{j+1}$) and the position ($Y_j$, $Y_{j+1}$) of a number of points of this ground surface relative to the measuring point.

Such a device is known from the Netherlands patent NL-C-1009364. This known device is used during application of a new top layer of for instance asphalt or asphalt concrete, wherein at a determined location along the width of a road surface the actual longitudinal section of this road surface is continuously determined and compared to a desired longitudinal section. The laser light source generates for instance a pulsed laser beam scanning a determined angular range which strikes the ground surface, is reflected and detected by the sensor means, wherein the time delay is directly proportional to the distance between light source and point on the ground surface. The position of the point on the ground surface can be precisely determined relative to the laser light source (the measuring point) from the angle at which the laser beam was transmitted and the determined distance. With the known contour-measuring device it is possible to measure the contour of a ground surface in contact-free manner and to determine for each point on this ground surface a desired height which is determined by the actual height of that point and of a large number of nearby points on that ground surface, wherein the desired height has no absolute value but is always determined relative to the measuring point, in this case the position of the laser light source.

GB 2 219 399 A discloses a device according to the preamble of claim 1.

It is a drawback of the contour-measuring device known From NL-C-1 009 364 that it is not suitable for determining an absolute transverse section of a road surface, i.e. the absolute height of a number of successive points in transverse direction of this road surface.

In order to determine an absolute transverse section it is necessary to have available information concerning the absolute height of the point from which the transverse section is measured, the measuring point. According to a known measuring method the height of a measuring point is determined using a viewer which is placed on a tripod at this measuring point and which is directed successively at three reference objects. A reference object is formed for instance by a prism placed at well-defined height at a reference point, the absolute height of which is determined according to a per se known geodesic method. The absolute height of the measuring point can be determined from the position and the direction of the viewer in relation to the reference objects.

The known method of determining a transverse section is time-consuming, very labour-intensive and therefore expensive. The known method of determining moreover entails the drawback that traffic on the road in question must be halted for this purpose, which results in delays and traffic jams, and therefore in economic loss.

It is an object of the invention to provide a device for determining a contour of a ground surface in quick, efficient and cost-saving manner. It must be possible to apply such a device to determine a transverse section of a road surface, without the necessity of halting the traffic while applying the device.

These object are achieved, and other advantages gained, with a device according to claim 1.

Because the reflective surface in a reflector device according to the invention is well-defined relative to a reference point, is possible to derive the height relative to and the distance from the laser light source to the reference point from the measured coordinates of at least two reflecting points on the reflective surface, and thus express the coordinates of the laser light source in a coordinate system which is fixed relative to the reference point. A contour of a ground surface, for instance the transverse section of a road surface, determined by the laser light source using the device can thus be expressed in terms of the fixed coordinate system, with which the absolute height of this surface can be determined for a large number of points located on a line to be described by the laser beam.

Because a laser light source in a device according to the invention can cover a great distance of a surface for measuring from one measuring point, it is possible in a transverse section measurement of a road surface to place the device adjacently of this road surface, at least adjacently of the lanes thereof. It is further possible to choose a reference point adjacently of these lanes. Both options imply the possibility of performing a transverse section measurement of a road surface without the necessity of this road surface, or at least the lanes thereon, being taken up with measuring equipment or operating personnel moving about thereon. This means that it is possible to perform a transverse section measurement of a road surface in simple manner with a device according to the invention, without the traffic on this road surface having to be completely halted for this purpose.

The well-defined surface is in principle any surface which is suitable for reflecting an incident laser beam and which is adapted or designed such that the location at which the laser beam is reflected can be unequivocally related to the reference point.

The reflective surface is for instance formed by a bar code to be scanned by the laser light beam.

In a device according to the invention, wherein the laser light source is adapted to move the laser beam in one plane of movement, the reflective surface is formed by at least a part of the outer surface of an elongate body with a well-defined cross-section, which body extends transversely and crosses of the plane of movement of the laser beam.

If such an elongate reflective surface is placed at a reference point adjacently of and parallel to a lane, the accuracy in the placing of the laser light source along this road surface is determined by the length of the reflective surface, and it is for instance possible to place the laser light source on a vehicle which is moved along the lane, for instance on a hard shoulder, from measuring point to measuring point.

In a particularly advantageous embodiment of such a device according to the invention the elongate body is a cylinder. A cylindrical reflector surface provides the advantage that it can be manufactured in simple manner and at low cost.

It is noted that an at least partly cylindrical, elongate reflective surface is particularly advantageous, although any well-defined surface is in principle suitable for use as the laser beam-reflecting surface.

The outer surface of the elongate body has for instance an elliptical cross-sectional form.

In an embodiment of a reflector device with an elongate body, the elongate body is provided on at least one of its outer ends with at least one element reflecting the laser beam, the reflection coefficient or appearance of which differs from respectively the reflection coefficient or the appearance of the reflective surface.

Such a reflecting element is in practice important in determining the correct location for a laser light source placed on a vehicle. For this purpose a laser beam moving in a vertical plane transversely of the direction of movement of the vehicle is for instance transmitted as the vehicle approaches the measuring point at a determined speed, and the intensity of the reflected signal is measured. If the laser beam is not incident upon the reflector device, the reflected beam is non-specific, as soon as the laser beam is incident upon the reflector element the reflected beam is specific to the reflector element, which can for instance be seen from the intensity of the reflected beam or the profile of the reflecting element derived from this beam, and the operative knows that the measuring device has approached the location of the measuring point. At this moment the speed of the vehicle is reduced until the laser beam is incident upon the reflective surface, wherein the reflected beam is specific to the reflective surface, which can for instance be seen from the intensity of the reflected beam or the profile of the reflective surface derived from this beam, and the vehicle is stopped in order to perform the measurement of the transverse section of the road surface.

In an advantageous embodiment of a device according to the invention the measuring means further comprise a clinometer.

A clinometer provides the option of correcting the values for the contour determined with the device in situations where the laser light source, which is situated some height above the ground surface in question, does not lie perpendicularly above the intended measuring point on the ground surface as a result of an inclining progression of this surface or unevenness. A clinometer is per se known, for instance in the form of an electronic spirit level.

In yet another practical advantageous embodiment, which makes it possible to perform a transverse section measurement of a road surface without the traffic on this road surface having to be halted for this purpose, the processing means are adapted to reject an actual value for the height ($Z_j$, $Z_{j+1}$) if this actual value exceeds a predetermined threshold value. Such undesired actual values, which are for instance obtained when the laser beam reflects on a chance passing vehicle and not on the road surface, can be filtered out in per se known manner using the processing means.

The invention will be elucidated hereinbelow on the basis of exemplary embodiments, with reference to the drawings.

In the drawings

Fig. 1 shows a perspective view of a part of a road surface on which a lane is indicated by means of marking lines,
Fig. 2 shows a transverse section of the road surface of fig. 1 having thereon in a highly simplified schematic view an embodiment of a measuring device according to the invention for measuring the transverse section,
Fig. 3 is a perspective view of the reflector of the measuring device shown in fig. 2, with a first embodiment of an elongate body with reflective surface,
Fig. 4 shows a second embodiment of a reflector with a second embodiment of an elongate body with reflective surface,
Fig. 5 shows the reflector of fig. 3 and 4 in a cross-section transversely of the elongate body, and
Fig. 6a,b are top views of the road surface part shown in fig. 1 with a vehicle on which the measuring device is placed.

Corresponding components are designated in the figures with the same reference numerals.

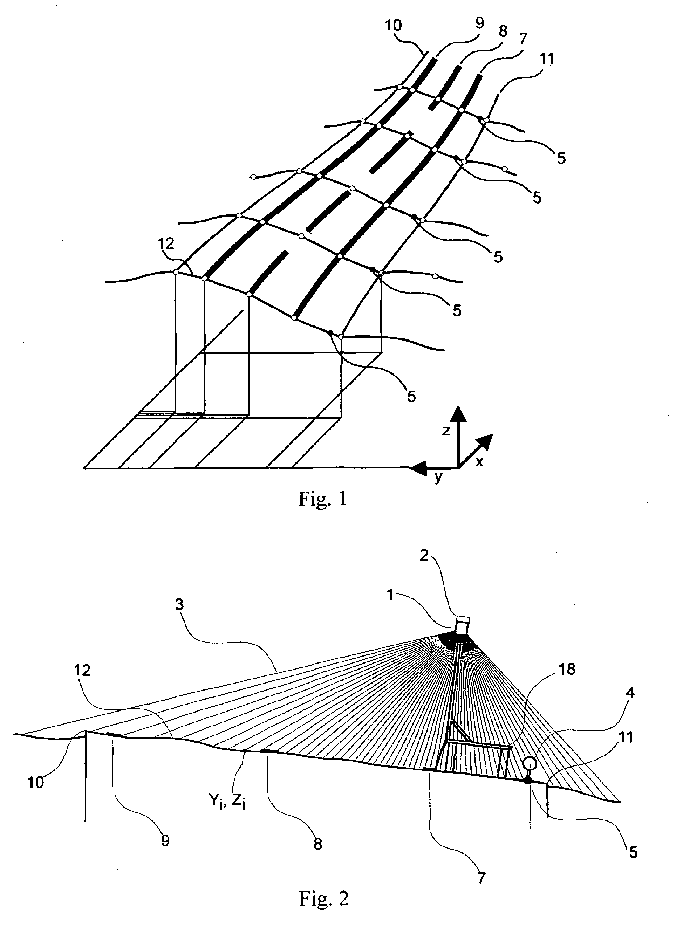

Fig. 1 shows a road surface with points 7, 8, 9, 10, 11 on a line 12 transversely of the lane, the height of which must be determined. Points 7, 9, 8, 11 and 10 lie respectively on the right and left-hand continuous marking line, the broken centre line and on the right and left-hand hardened verge. Reference points 5 are indicated outside the lane (on the hard shoulder). Reference points 5 are points whose absolute height and position are predetermined; transverse lines 12 extend from these reference points 5. The figure also shows a Cartesian coordinate system X,Y,Z, wherein the X and the Y directions are chosen parallel and perpendicular to the lane, and Z represents the height of a point.

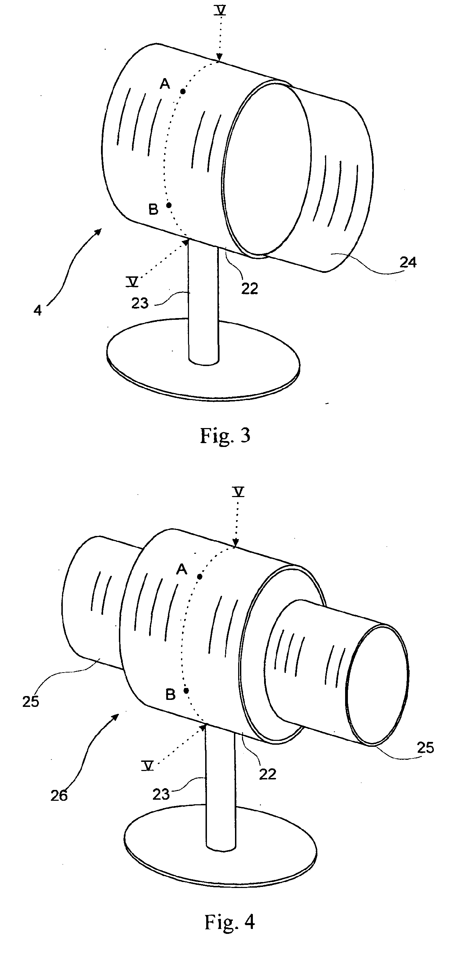

Fig. 2 shows a transverse section 12 having thereon a vehicle 18 on which is placed a contour measuring device with laser light source 1 and clinometer 2. Laser light source 1 is a laser measuring system which transmits a pulsed infrared laser light beam 3 which, using a rotating mirror, is swivelled in steps of for instance 0.25° through an angle of for instance 100° to 180° over road surface 12. A sensor built into laser scanner 1 detects the part of a laser beam 3 reflected by road surface 12. The distance between scanner 1 and a point I on road surface 12 can be calculated from the time delay, from which distance, the scanning angle and the angle of inclination measured by clinometer 2 the relative distance $Y_i$ and the relative height $Z_i$ of point i can then be calculated. By also measuring the relative distance to and the height of a reference object 4 the absolute values of transverse section 12 can be determined from the relative values for location and height of the measured points, as will be further elucidated below in the description of fig. 4. It can readily be appreciated that a scanner 1 at a height of for instance 2.5 m above road surface 12 with a scanning range of 150° (75° in rearward and 75° in forward direction) covers a distance with a length of about 18.6 m over the road surface.

Fig. 3 shows a reflector 4 with a hollow cylinder 22 with reflective surface on a foot 23. A hollow reflector element 24 is arranged on an outer end of cylinder 22. If such a reflector 4 is placed at a reference point 5 with its cylinder axis parallel to a right-hand line marking of a lane, as shown in figures 2 and 3, a part of a circle (indicated with dashed line - - - ) on the periphery of reflector body 22 and directed toward laser source 1 is illuminated by a laser beam scanning in a vertical plane from a laser light source placed on transverse line 12 and, from the reflection of the laser beam at two points A, B on the cylinder surface, the exact position of these points relative to the centre M of the cylinder can be calculated.

Fig. 4 shows a reflector 26 with a cylinder 22 with reflective surface on a foot 23. A cylindrical reflector element 25 is arranged on each of the outer ends of cylinder 22. The diameter of cylindrical elements 25 is smaller than the diameter of cylinder 22.

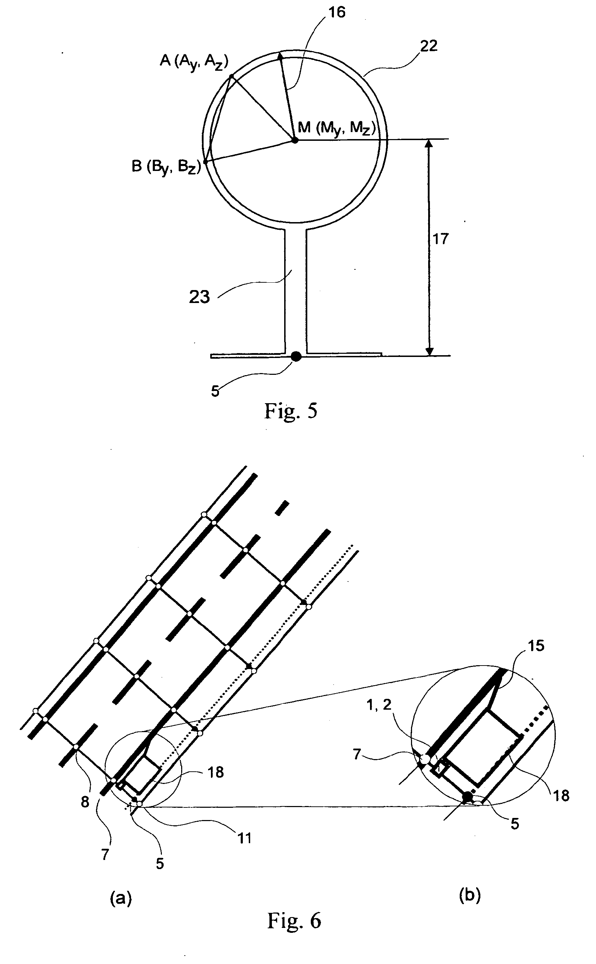

Fig. 5 shows the cross-section through the cylinder body of reflectors 4, 26 along the line V-V in fig. 3 and fig. 4. Using elementary goniometric calculations on the triangle ABM the coordinates of $A(A_y, A_z)$ and $B(B_y, B_z)$ can be related to the coordinates $M(M_y, M_z)$ and the outer radius r (16) of the cylinder casing as follows:

$$M_y = \tfrac{1}{2}\left(A_y + B_y\right) + \sqrt{r^2 - \tfrac{1}{4}\left(A_y - B_y\right)^2 - \tfrac{1}{4}\left(A_z - B_z\right)^2} \cdot \frac{\left(A_z - B_z\right)}{\sqrt{\left(A_y - B_y\right)^2 + \left(A_z - B_z\right)^2}}$$

$$M_z = \tfrac{1}{2}\left(A_z + B_z\right) + \sqrt{r^2 - \tfrac{1}{4}\left(A_y - B_y\right)^2 - \tfrac{1}{4}\left(A_z - B_z\right)^2} \cdot \frac{\left(A_y - B_y\right)}{\sqrt{\left(A_y - B_y\right)^2 + \left(A_z - B_z\right)^2}}$$

Using these relations the coordinates of laser light source 1, and thereby the coordinates of the measured transverse section 12, can be related to coordinates $M(M_y, M_z)$. Because the height 17 of the centre M has a known constant value relative to reference point 5, the coordinates of the transverse section can be represented in a coordinate system which is directly determined by reference point 5, the absolute height and position of which are known.

Fig. 6a shows in a top view the road surface of fig. 1 with a vehicle 18 on which the measuring device is placed, fig. 6b shows the placing of measuring vehicle 18 in more detail. Vehicle 18 is placed on the hard shoulder just outside the right-hand marking line 7. As vehicle 18 moves between a measuring point 5 and a subsequent measuring point 5, marking line 7 is scanned using a per se known scanning pin 15 so that vehicle 18 is always directed parallel to the lane and laser scanner 1 is always directed transversely of this lane.

It is noted that the above described exemplary embodiment serves to elucidate the invention, and not to limit the scope of protection sought, which is provided by the appended claims.

The distance between the measuring points and reference points 5 will be given by a constant value in practical situations. This is not however essential, since this distance can be measured using laser scanner 1 and the associated processing unit.

Where a cylindrical reflector body is applied in the above discussed embodiment, it is also possible to apply for instance an elongate body, each point of which can be related in a cross-section to a fixed point linked to this body. The elongate body has for instance an at least partly elliptical or parabolic cross-sectional form, wherein each location on this elliptical or parabolic form can be expressed in the coordinates of the foci of this ellipse or the focus of the parabola.

## Claims

1. Device for determining a contour of a ground surface, for instance the transverse section (12) of a road surface, at least comprising measuring means for generating along a determined distance on a ground surface actual values for the height ($Z_j$, $Z_{j+1}$) and the position ($Y_j$, $Y_{j+1}$) of a number of points of this ground surface relative to a determined reference point (5), which measuring means comprise
   a laser light source (1) which is placed at a measuring point above the ground surface and which is adapted to generate a laser beam (3) moving over said determined distance on the ground surface,
   sensor means for detecting the laser beam (3) reflected by the ground surface to the measuring point,
   distance-measuring means for determining the distance travelled by said laser beam (3) between the laser light source (1) and the ground surface,
   processing means for generating from signals from the laser light source, the sensor means and the time-measuring means of actual values for the height ($Z_j$, $Z_{j+1}$) and the position ($Y_j$, $Y_{j+1}$) of a number of points of this ground surface relative to the measuring point, and
   a reflector device (4, 26) which is placed at the position of the reference point (5) for the purpose of providing a reflective surface (22) which is well-defined relative to the reference point (5) and which is designed to reflect the laser beam (3), wherein the laser light source (1) is adapted to move the laser beam (3) in one plane of movement comprising said number of points of the ground surface, the reflective surface is formed by at least a part of the outer surface of an elongate body (22) with a well-defined cross-section, **characterized in that** said elongate body (22) extends transversely of and crosses the plane of movement of the laser beam (3).

2. Device as claimed in claim 1, **characterized in that** the elongate body is a cylinder (22).

3. Device as claimed in claim 1, **characterized in that** the outer surface of the elongate body has an elliptical cross-sectional form.

4. Device as claimed in any of the claims 1-3, **characterized in that** the elongate body (22) is provided on at least one of its outer ends with an element (24, 25) reflecting the laser beam (3), the reflection coefficient or appearance of which differs from respectively the reflection coefficient or the appearance of the reflective surface.

5. Device as claimed in any of the claims 1-4, **characterized in that** the measuring means further comprise a clinometer (2).

6. Device as claimed in any of the claims 1-4, **characterized in that** the processing means are adapted to reject an actual value for the height ($Z_j$, $Z_{j+1}$) if this actual value exceeds a predetermined threshold value.

## Patentansprüche

1. Vorrichtung zum Bestimmen einer Kontur einer Geländeoberfläche, z. B. den Querschnitt (12) einer Fahrbahnoberfläche, wobei die Vorrichtung zumindest Messmittel zum Erzeugen, entlang eines bestimmten Abstands auf einer Geländeoberfläche, von Ist-Werten für die Höhe ($Z_j$, $Z_{j+1}$) und die Position ($Y_j$, $Y_{j+1}$) von einer Anzahl von Punkten dieser Geländeoberfläche relativ zu einem bestimmten Referenzpunkt (5) aufweist, wobei die Messmittel aufweisen:

   eine Laserlichtquelle (1), die an einem Messpunkt über der Geländeoberfläche angeordnet ist und geeignet ist, einen Laserstrahl (3) zu erzeugen, der sich über dem bestimmten Abstand auf der Geländeoberfläche bewegt, Sensormittel zum Detektieren des Laserstrahls (3), der durch die Geländeoberfläche auf den Messpunkt reflektiert wird,
   Abstandsmessmittel zum Bestimmen des Abstands, der durch den Laserstrahl (3) zwischen der Laserlichtquelle (1) und der Geländeoberfläche zurückgelegt wird,
   Verarbeitungsmittel zum Erzeugen, anhand der Signale von der Laserlichtquelle, den Sensormitteln und der Zeitmessmittel, von Ist-Werten für die Höhe ($Z_j$, $Z_j+_1$) und die Position ($Y_j$, $Y_{j+1}$) von einer Anzahl von Punkten dieser Geländeoberfläche relativ zu dem Messpunkt, und

eine Reflektorvorrichtung (4, 26), die an der Position des Referenzpunkts (5) für den Zweck der Schaffung einer reflektiven Oberfläche (22), die relativ zu dem Referenzpunkt (5) klar definiert ist und konzipiert ist, um den Laserstrahl (3) zu reflektieren, angeordnet ist, wobei die Laserlichtquelle (1) geeignet ist, den Laserstrahl (3) in einer Bewegungsebene zu bewegen, die die Anzahl der Punkte der Geländeoberfläche aufweist, wobei die reflektive Oberfläche aus zumindest einem Teil der äußeren Oberfläche eines länglichen Körpers (22) mit einem klar definierten Querschnitt besteht, **dadurch gekennzeichnet, dass** der längliche Körper (22) sich quer zur Bewegungsebene des Laserstrahls (3) bewegt und diese kreuzt.

2. Vorrichtung nach Anspruch 1, **dadurch gekennzeichnet, dass** der längliche Körper ein Zylinder (22) ist.

3. Vorrichtung nach Anspruch 1, **dadurch gekennzeichnet, dass** die äußere Oberfläche des länglichen Körpers eine elliptische Querschnittsform aufweist.

4. Vorrichtung nach einem der Ansprüche 1 bis 3, **dadurch gekennzeichnet, dass** der längliche Körper (22) auf zumindest einem ihrer äußeren Enden angeordnet ist, wobei ein Element (24, 25) den Laserstrahl (3) reflektiert, dessen Reflexionskoeffizient oder Erscheinungsbild sich jeweils von dem Reflexionskoeffizienten oder dem Erscheinungsbild der reflektiven Oberfläche unterscheidet.

5. Vorrichtung nach einem der Ansprüche 1 bis 4, **dadurch gekennzeichnet, dass** die Messmittel ferner ein Klinometer aufweisen.

6. Vorrichtung nach einem der Ansprüche 1 bis 4, **dadurch gekennzeichnet, dass** die Verarbeitungsmittel geeignet sind, einen Ist-Wert für die Höhe ($Z_j$, $Z_{j+1}$) abzulehnen, wenn dieser Ist-Wert einen vorbestimmten Schwellwert überschreitet.

## Revendications

1. Dispositif permettant de déterminer un contour d'une surface de sol, par exemple, la section transversale (12) d'une surface de route, comprenant au moins des moyens de mesure pour générer le long d'une distance déterminée sur une surface de sol des valeurs réelles pour la hauteur ($Z_j$, $Z_{j+1}$) et la position ($Y_j$, $Y_{j+1}$) d'un certain nombre de points de cette surface de sol par rapport à un point de référence (5) déterminé, lesquels moyens de mesure comprennent :

une source de lumière laser (1) qui est placée à un point de mesure au-dessus de la surface de sol et qui est adaptée pour générer un faisceau laser (3) se déplaçant sur ladite distance déterminée sur la surface de sol, des moyens de capteur permettant de détecter le faisceau laser (3) réfléchi par la surface de sol au point de mesure,

des moyens de mesure de distance permettant de déterminer la distance parcourue par ledit faisceau laser (3) entre la source de lumière laser (1) et la surface de sol,

des moyens de traitement permettant de générer, à partir de signaux de la source de lumière laser, les moyens de capteur et les moyens de mesure de temps des valeurs réelles pour la hauteur ($Z_j$, $Z_{j+1}$) et la position ($Y_j$, $Y_{j+1}$) d'un certain nombre de points de cette surface de sol par rapport au point de mesure, et

un dispositif de réflecteur (4, 26) qui est placé à la position du point de référence (5) dans le but de générer une surface réfléchissante (22) qui est bien définie par rapport au point de référence (5) et qui est conçue pour réfléchir le faisceau laser (3), dans lequel la source de lumière laser (1) est adaptée pour déplacer le faisceau laser (3) dans un plan de mouvement comprenant ledit certain nombre de points de la surface de sol, la surface réfléchissante est formée par au moins une partie de la surface externe d'un corps allongé (22) avec une section transversale bien définie, **caractérisé en ce que** ledit corps allongé (22) s'étend transversalement au plan de mouvement du faisceau laser (3) et le traverse.

2. Dispositif selon la revendication 1, **caractérisé en ce que** le corps allongé est un cylindre (22).

3. Dispositif selon la revendication 1, **caractérisé en ce que** la surface externe du corps allongé a une forme en coupe elliptique.

4. Dispositif selon l'une quelconque des revendications 1 à 3, **caractérisé en ce que** le corps allongé (22) est pourvu sur au moins une de ses extrémités extérieures d'un élément (24, 25) réfléchissant le faisceau laser (3), dont le coefficient de réflexion ou l'apparence diffère respectivement du coefficient de réflexion ou de l'apparence de la surface réfléchissante.

**5.** Dispositif selon l'une quelconque des revendications 1 à 4, **caractérisé en ce que** les moyens de mesure comprennent en outre un clinomètre (2).

**6.** Dispositif selon l'une quelconque des revendications 1 à 4, **caractérisé en ce que** les moyens de traitement sont adaptés pour rejeter une valeur réelle pour la hauteur ($Z_j$, $Z_{j+1}$) si cette valeur réelle excède une valeur de seuil prédéterminée.

Fig. 1

Fig. 2

Fig. 3

Fig. 4

Fig. 5

(a)                                                          (b)

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1009364 C

- GB 2219399 A